Europäisches Patentamt

European Patent Office

Office européen des brevets

(19)

(11) Veröffentlichungsnummer: **0 136 417**
**B1**

(12)

# EUROPÄISCHE PATENTSCHRIFT

(45) Veröffentlichungstag der Patentschrift:
02.09.87

(21) Anmeldenummer: 84107950.2

(22) Anmeldetag: 06.07.84

(51) Int. Cl.⁴: **F 16 K 11/07, F 15 B 13/04**

(54) Hydraulische Steuereinrichtung für die Arbeitshydraulik von Traktoren.

(30) Priorität: 22.09.83 DE 3334253

(43) Veröffentlichungstag der Anmeldung:
10.04.85 Patentblatt 85/15

(45) Bekanntmachung des Hinweises auf die Patenterteilung:
02.09.87 Patentblatt 87/36

(84) Benannte Vertragsstaaten:
AT DE FR GB IT

(56) Entgegenhaltungen:
DE-C-1 650 452
FR-A-2 075 102

(73) Patentinhaber: Klöckner- Humboldt- Deutz
Aktiengesellschaft, Deutz- Mülheimer- Strasse
111 Postfach 80 05 09, D-5000 Köln 80 (DE)

(72) Erfinder: Adams, Heribert, Dipl- Landwirt, Eigen
34, D-5064 Rösrath (DE)

EP 0 136 417 B1

**Beschreibung**

Die Erfindung bezieht sich auf eine hydraulische Steuereinrichtung für die Arbeitshydraulik von Traktoren gemäß dem Oberbegriff des Anspruchs 1.

Es ist aus der DE-C-1 650 452 eine Steuereinrichtung der geschilderten Art bekanntgeworden, deren Steuerschieber durch eine federbelastete Raste außerhalb seiner Neutralstellung in zwei Schaltstellungen festlegbar ist. Dabei wird in der einen Schaltstellung einem Verbraucher, beispielsweise einem Zylinder, Druckflüssigkeit zugeführt, während in der anderen Schaltstellung Druckflüssigkeit aus dem Hubzylinder ausströmen kann. Die Raste ist hydraulisch betätigbar und daher über ein Vorsteuerventil mit der Pumpendruckleitung verbunden. Hierdurch wird erreicht, daß in der erstgenannten rastbaren Schaltstellung die Raste bei Überschreitung eines vorbestimmten Druckes am Verbraucher bzw. am Vorsteuerventil hydraulisch beaufschlagt und entrastet wird, so daß der Steuerschieber dann selbsttätig in seine Neutralstellung zurückspringt. An landwirtschaftlichen Geräten werden manchmal Arbeitszylinder mit geringem Schluckvolumen verwendet. Wird nun der volle Druckflüssigkeitsstrom auf solche Arbeitszylinder geschaltet, ist der Bewegungsablauf sehr schnell und es treten hohe Beschleunigungskräfte auf. Zur Vermeidung dieser Nachteile werden den Arbeitszylindern Drosseln vorgeschaltet, die den Bewegungsablauf dämpfen. Dies hat jedoch den Nachteil, daß der Druck vor der Drossel auf den maximalen Betriebsdruck ansteigt und ein Teil des Druckflüssigkeitsstromes über das zur Sicherung in der Steuereinrichtung vorhandene Druckbegrenzungsventil abfließt. Ein derartiger Betriebszustand kann aber eine vorzeitige Entrastung auslösen, so daß hierdurch eine sichere Funktion der Rastung in den vorgesehenen Schaltstellungen des Steuerschiebers nicht mehr gegeben ist.

Auch die FR-A- 2 075 102 befaßt sich mit einer solchen Steuereinrichtung, deren zwei Steuerschieber an einer schwenkbaren Rastscheibe gemeinsam betätigbar angelenkt sind. An der Rastscheibe greift eine hydraulische Raste an, durch die bei Endlage eines Verbrauchers infolge Druckanstieg im System die Rastscheibe ausgelöst wird, so daß die Steuerschieber durch Federkraft in ihre Neutralstellung zurückgestellt werden. Dieser bekannten Steuereinrichtung haftet im übrigen der gleiche Mangel an, wie er bereits vorstehend zu der DE-C- 1 650 652 geschildert wurde.

Ausgehend von dieser Erkenntnis ist es Aufgabe der Erfindung, eine Steuerinrichtung der eingangs umrissenen Gattung mit einfachen Mitteln dahingehend zu verbessern, daß ein vorzeitiges Auslösen der Raste vor Beendigung des eingeleiteten Steuervorgangs mit Sicherheit vermieden wird.

Die Aufgabe wird durch die Merkale von Anspruch 1 gelöst.

Durch diese Maßnahmen wird der Ansprechdruck der Raste erst geraume Zeit nach Erreichen seines Sollwertes an der Raste wirksam, so daß ein durch Rastung des Steuerschiebers eingeleiteter Arbeitsvorgang zunächst ablaufen kann, bevor der Steuerschieber durch Auslösen der Raste in die Neutralstellung zurückgeht.

Bei einer Steuereinrichtung mit zwei voneinander unabhängigen Arbeitskreisen ist vorgesehen, daß beide Arbeitskreise eine gemeinsame verzögernde Einrichtung mit einem Vorspannventil sowie einem Schieberventil aufweisen, die durch je ein Druckbegrenzungsventil mit den beiden Arbeitskreisen verbunden ist.

Zwei Ausführungsbeispiele der Erfindung sind im folgenden anhand der Zeichnung näher beschrieben.

Es zeigt:

Fig. 1 eine schematische Darstellung einer hydraulischen Steuereinrichtung gemäß der Erfindung,

Fig. 2 ein anderes Ausführungsbeispiel.

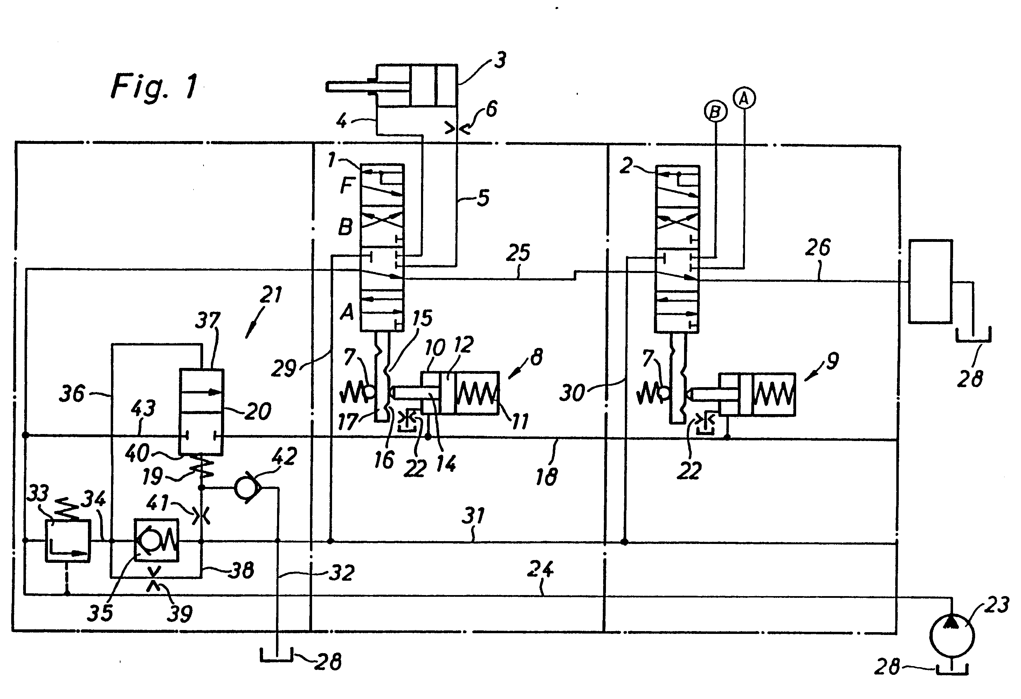

In der als Blockschaltung dargestellten Steuereinrichtung gemäß Fig. 1 sind zwei als Schieber ausgebildete Wegeventile 1 und 2 vorgesehen, die hydraulisch in Reihe geschaltet sind. Das Wegeventil 1 dient zur Betätigung eines doppeltwirkenden Hubzylinders 3 und ist mit diesem durch Leitungen 4 und 5 verbunden. In die Leitung 5 ist eine Drossel 6 eingeschaltet. Der vom Wegeventil 2 zu betätigende Verbraucher ist nicht dargestellt. Beide Wegeventile 1 und 2 haben je eine in einer Schaltstellung wirksame mechanische Raste 7 sowie je eine in zwei Schaltstellungen der Wegeventile 1 und 2 wirksame Rasten 8 bzw. 9, die mechanisch einrückbar und hydraulisch ausrückbar sind. Die Rasten 8, 9 haben in einem Zylinder 10 einen durch eine Feder 11 belasteten Kolben 12, der je nach Schaltstellung mit einem Stößel 14 in eine Ausnehmung 15 bzw. 16 an einen Schieberteil 17 des entsprechenden Wegeventils 1 bzw. 2 eingreift. Die beiden Rasten 8, 9 sind hydraulisch an eine Leitung 18 angeschlossen, die mit einem durch eine Feder 19 im Schließsinn belasteten Schieberventil 20 einer Verzögerungseinrichtung 21 in Verbindung steht. Außerdem ist jede Raste 8, 9 zur Belüftung ihres Arbeitsraumes unter Einwirkung der Feder 11 über eine Drossel 22 mit dem Vorratsbehälter 28 verbunden.

Zur Versorgung der Steuereinrichtung mit Druckflüssigkeit dient eine Hydropumpe 23, die mittels einer Leitung 24 an das Wegeventil 1 angeschlossen ist. Die beiden Wegeventile 1 und 2 sind durch eine Leitung 25 miteinander verbunden, wobei vom Wegeventil 2 eine Leitung 26 zum Vorratsbehälter 28 für Druckflüssigkeit führt. Außerdem sind beide Wegeventile 1 und 2 auch über je eine Leitung 29 bzw. 30 sowie daran anschließende Leitungen 31, 32 mit dem Vorratsbehälter 28 verbunden. Als Teil der Verzögerungseinrichtung 21 ist an die Leitung 24 ein Druckbegrenzungsventil 33 angeschlossen, dessen Ausgang 34 mit einem Vorspannventil 35 in Verbindung steht. An das Vorspannventil 35 ist ausgangsseitig die Leitung 31 angeschlossen. Vom Ausgang 34 des Druckbegrenzungsventils 33 führt ferner eine Leitung 36 zu der der Feder 19 abgewandten Stirnseite 37 des Schieberventils 20 und eine andere Leitung 36 mit einer darin angeordneten Drossel 39 verbindet den Ausgang 34 mit der Leitung 31. Die federseitige Stirnseite 40 des Schieberventils 20 ist über eine Drossel 41 und ein dazu parallel geschaltetes Rückschlagventil 42 ebenfalls mit der Leitung 31 verbunden, die über die Leitung 32 zum Vorratsbehälter 28 führt. Für die Zufuhr von Druckflüssigkeit zum Schieberventil 20 ist dieses durch eine Leitung 43 mit der an die Hydropumpe 23 angeschlossene Leitung 24 verbunden.

Beim Betrieb der Hydropumpe 23 strömt bei der gezeigten Schaltstellung der Wegeventile 1 und 2 die gesamte Fördermenge der Druckflüssigkeit durch die Leitungen 24, 25 und 26 zurück zum Vorratsbehälter 28. Wird dann das Wegeventil 1 aus der gezeigten Neutralstellung beispielsweise in die Schaltstellung A geschoben, greift die Raste 8 mit ihrem Stößel 14 in die Ausnehmung 16 unter Federkraft ein und hält das Wegeventil 1 in dieser Schaltstellung. Hierbei wird die Hydropumpe 23 durch die Leitungen 5, 24 sowie die Drossel 6 mit dem einen Arbeitsraum des Hubzylinders 3 verbunden. Der andere Arbeitsraum des Hubzylinders 3 steht gleichzeitig durch die Leitungen 4, 29 und 32 mit dem Vorratsbehälter 28 in Verbindung. Der Hubzylinder 3 wird folglich betätigt. Bei Erreichen des max. Betriebsdruckes im Leitungssystem spricht das Drückbegrenzungsventil 33 an, wobei die am Ausgang 34 desselben anfallende Druckflüssigkeit durch das nachgeschaltete Vorspannventil 35 auf zumindest 3 bar vorgespannt wird. Dieser Druck wirkt auf die Stirnseite 37 des Schieberventils 20 und bewegt dieses entgegen der Kraft der Feder 19 im Öffnungssinn, wobei an der Stirnseite 40 Druckflüssigkeit verdrängt wird. Bei dieser Anordnung sind die Druckflüssigkeitsräume, die Drossel 41 sowie die Menge der zur Stirnseite 37 des Schieberventils 20 strömenden Druckflüssigkeit so aufeinander abgestimmt, daß mehrere Sekunden vergehen, bis das Schieberventil 20 seine geöffnete Endstellung erreicht hat. In dieser Schaltstellung des Schieberventils wird eine Verbindung der Hydropumpe 23 über die Leitungen 24, 43 und 18 mit den Rasten 8, 9 herbeigeführt. Das im vorliegenden Fall in der Schaltstellung A befindliche Wegeventil 1 wird entrastet und durch die Wirkung nicht gezeigter Zentrierfedern in die neutrale Ausgangsstellung zurückgeführt. Der max. Betriebsdruck geht folglich auf den Neutralumlaufdruck zurück und das Druckbegrenzungsventil 33 schließt sich. Das Schieberventil 20 gelangt dabei durch die Kraft der Feder 19 wieder in Schließstellung, indem bei gleichzeitiger Verdrängung von Druckflüssigkeit von dessen Stirnseite 37 durch die Drossel 39 die erforderliche Druckflüssigkeitsmenge zur Stirnseite 40 durch das Rückschlagventil 42 vom Vorratsbehälter 56 her angesaugt wird.

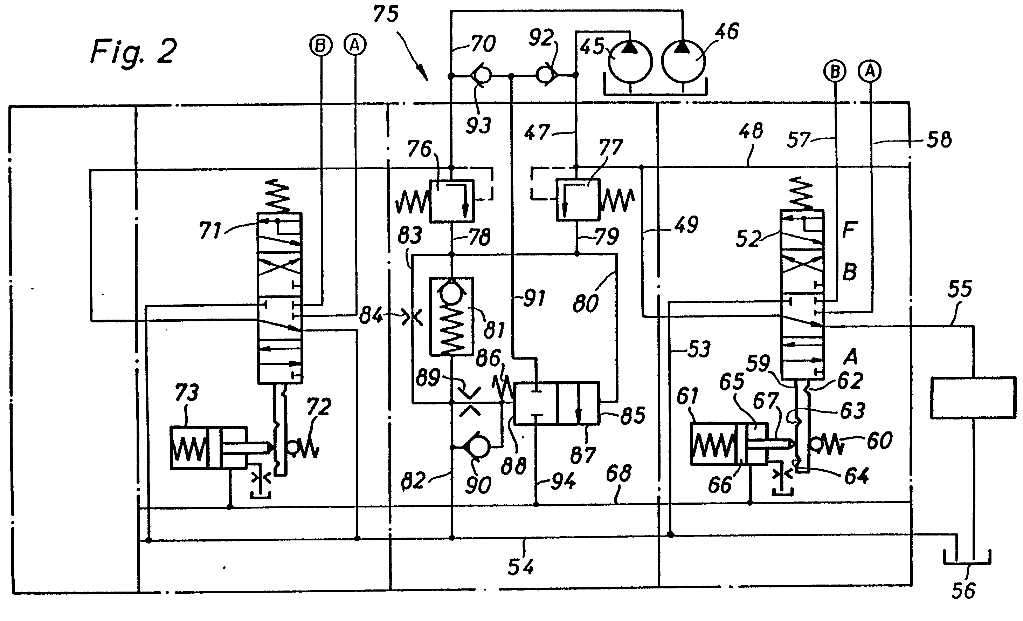

Bei der Steuereinrichtung gemäß Fig. 2 sind zwei Hydropumpen 45, 46 angeordnet, die zur Versorgung zweier unabhängiger hydraulischer Arbeitskreise dienen. Die Hydropumpe 45 ist durch Leitungen 47, 48, und 49 mit dem Eingang eines Wegeventils 52 verbunden, das ausgangsseitig über Leitungen 53, 54 bzw. 55 an einen Vorratsbehälter 56 für die Druckflüssigkeit angeschlossen ist. Mit dem Wegeventil 52 kann über davon ausgangsseitig abgehende Leitungen 57, 58 ein nicht dargestellter Verbraucher betätigt werden. Am Schieberteil 59 des Wegeventils 52 sind zum Eingreifen zweier Rasten 60, 61 Ausnehmungen 62 bzw. 63, 64 vorgesehen. Beide Rasten 60, 61 sind durch Federkraft einrückbar und die Raste 61 ist außerdem hydraulisch ausrückbar. Die Raste 61 hat zu diesem Zweck in einem Arbeitsraum 65 einen Kolben 66 mit einem Stößel 67, der als Rastelement dient. Der Arbeitsraum 65 der Raste 61 steht hydraulisch mit einer Leitung 68 in Verbindung.

Der an die Hydropumpe 46 mittels einer Leitung 70 angeschlossene zweite Arbeitskreis ist in gleicher Weise aufgebaut wie der an die Hydropumpe 45 angeschlossene erste Arbeitskreis. Auch bei dem an die Hydropumpe 46 angeschlossenen zweiten Arbeitskreis ist ein Wegeventil 71 vorgesehen, für dessen verschiedene Schaltstellungen eine mechanische Raste 72 und ebenfalls eine hydraulische Raste 73 angeordnet ist. Auch die Raste 73 steht hydraulisch mit der Leitung 68 in Verbindung.

Für die beiden hydraulischen Rasten 61, 73 der Wegeventile 52 bzw. 71 ist eine gemeinsame Verzögerungseinrichtung 75 vorgesehen. Hierbei ist an die Leitungen 47, 70 der beiden Arbeitskreise je ein Druckbegrenzungsventil 76 bzw. 77 angeschlossen, deren Ausgänge 78 bzw. 79 mit einer gemeinsamen Leitung 80 verbunden sind. An die Leitung 80 ist ein Vorspannventil 81 angeschlossen, das abströmseitig durch eine Leitung 82 mit der Leitung 54 in Verbindung steht. In eine parallel zum Vorspannventil 81 verlaufende Leitung 83 ist eine Drossel 84 eingeschaltet. Außerdem steht die Leitung 80 mit einer Stirnseite 85 eines im Schließsinn durch eine Feder 86 belasteten Schieberventils 87 in Verbindung. Die federseitige Stirnseite 88 des Schieberventils 87 ist über eine Drossel 89 und ein dazu parallel geschalteten Rückschlagventil 90 an die mit dem Rücklauf verbundene Leitung 82 angeschlossen. Schließlich steht das Schieberventil 87 eingangsseitig über eine Leitung 91 und zwei davon abzweigende Rückschlagventile 92, 93 mit der Leitung 47 bzw. 70 in Verbindung und ferner verbindet dis Leitung 94 das Schieberventil 87 ausgangsseitig mit der Leitung 68.

Beim Betrieb der Hydropumpe 45 strömt die geförderte Druckmittelmenge durch die Leitungen 47, 49, das Wegeventil 52 und Leitung 55 zum Vorratsbehälter 56 unter Neutralumlaufdruck zurück. Bei Betätigung beispielsweise des Wegeventils 52 wird in dessen Schaltstellung A ein an die Leitungen 57, 58 angeschlossener Verbraucher zugeschaltet und die Raste 61 greift mit ihrem Stößel 67 in die Ausnehmung 64 des Schieberteils 59 ein. Die Raste 61 hält somit den Schieber des Wegeventils 52 in dieser Schaltstellung. Wird nun am Verbraucher und damit auch im angeschlossenen Leitungsystem der maximale Betriebsdruck erreicht, spricht das Druckbegrenzungsventil 77 an und es baut sich ausgangsseitig in der Leitung 80 ein Druck auf, der aufgrund des angeschlossenen Vorspannventils 81 auf ca. 3 bar begrenzt wird. Dieser Druck beaufschlagt die Stirnseite 85 des Ventilschiebers 87 und bewegt diesen entgegen der Kraft der angreifenden Feder 86 im Öffnungssinn, wobei an der Stirnseite 88 Druckflüssigkeit verdrängt wird. Die Drossel 89 und die angrenzenden Druckmittelräume sind so bemessen, daß eine vorbestimmte Zeit vergeht, bis das Schieberventil 87 seine Offenstellung erreicht. Bei geöffnetem Schieberventil 87 strömt Druckflüssigkeit durch das Rückschlagventil 92 und die Leitungen 91, 94 zur Leitung 68, so daß durch Beaufschlagung des Kolbens 66 die Raste 61 gelöst wird. Das Wegeventil 52 geht folglich unter der Kraft der angreifenden Zentrierfeder aus der Schaltstellung A wieder in seine neutrale Ausgangsstellung zurück. Der maximale Betriebsdruck fällt ebenfalls wieder auf den Neutralumlaufdruck ab und das Druckbegrenzungsventil 77 geht in Schließstellung.

Die gleiche Wirkung ergibt sich auch beim Betrieb der Hydropumpe 46 und bei Betätigung des Wegeventils 71 des anderen Arbeitskreises. Für die von den beiden Hydropumpen 45 und 46 versorgten Arbeitskreise ist somit nur eine Verzögerungseinrichtung mit zwei Druckbegrenzungsventilen 76 und 77 zum Anschluß an die beiden Arbeitskreise erforderlich.

**Patentansprüche**

1. Hydraulische Steuereinrichtung für die Arbeitshydraulik von Traktoren, insbesondere für ein hydraulisches Konstantstromsystem, mit einem über zumindest eine federbelastete Raste (8, 9) festlegbaren und hydraulisch ausrückbaren Steuerschieber (1, 2), der bei Entrastung mittels einer Rückstellkraft selbsttätig in seine Neutralstellung zurückgestellt wird, wobei die Entrastung des Steuerschiebers (1, 2) jeweils bei Erreichen des Betriebsdruckes am eingeschalteten Verbraucher (3) erfolgt, wobei daß in der Zuleitung (18, 43 bzw. 68, 91, 94) der hydraulischen Raste (8, 9 bzw. 61, 73) eine das Ansprechen derselben verzögernde Einrichtung (21 bzw. 75) angeordnet ist, dadurch gekennzeichnet, daß die verzögernde Einrichtung (21) ein Druckbegrenzungsventil (33) mit nachgeschaltetem Vorspannventil (35) sowie ein die Versorgung der hydraulischen Raste (8, 9) mit Druckflüssigkeit beherrschendes, im Schließsinn federbelastetes Schieberventil (20) aufweist, dessen federseitige Stirnseite (40) über eine Drossel (41) sowie ein dazu parallel geschaltetes Rückschlagventil (42) mit dem Vorratsbehälter (28) für Druckflüssigkeit und dessen andere Stirnseite (37) mit dem Ausgang (34) des Druckbegrenzungsventils (33) verbunden ist, der gleichfalls über eine Drossel (39) mit dem Vorratsbehälter (28) in Verbindung steht.

2. Steuereinrichtung nach Anspruch 1, wobei zwei voneinander unabhängige hydraulische Arbeitskreise vorhanden sind, dadurch gekennzeichnet, daß beide Arbeitskreise (Hydropumpen 45, 46) eine gemeinsame verzögernde Einrichtung (75) mit einem Vorspannventil (18) sowie einem Schieberventil (87) aufweisen, die durch je ein Druckbegrenzungsventil (76, 77) mit den beiden Arbeitskreisen verbunden ist.

**Claims**

1. A hydraulic control system for a hydraulic power supply unit of a tractor, particularly for a stabilized hydraulic power supply unit, the system comprising a control valve slide (1, 2) lockable by at least one catch (8, 9) arranged to engage the slide under spring bias and to disengage therefrom under hydraulic power, in which a restoring force causes the valve slide, when being unlocked, to return automatically to its neutral position, in which the control valve slide (1, 2) is arranged to be unlocked as soon as the working pressure at a connected consuming device (3) has been reached, and in which the feed duct (18, 43 and, respectively, 68, 91, 94) to the hydraulic catch (8, 9 and, respectively, 61, 73) includes means (21 and, respectively, 75) for retarding the catch's response, characterized in that the retarding means (21) comprise a pressure relief valve (33) the outlet of which is connected to a pressurizing valve (35), and a slide valve (20) which is spring-biased in closing direction and which controls the supply of pressure fluid to the hydraulic catch (8, 9), and in that the slide valve's spring-biased end face (40) is connected via a throttle (41) and also parallel therewith - via a check valve (42) to the pressure fluid reservoir (28) and its other end face (37) to the pressure relief valve's (33) outlet (34) which is also connected via a further throttle (39) to the reservoir (28).

2. A control system according to claim 1, in which the system comprises two hydraulic circuits operable independently from each other, characterized in that the retarding means (75) are common to both circuits (hydraulic pumps 45, 46), comprise a pressurizing valve (81) and a slide valve (87) and are connected via a respective pressure relief valve (76, 77) to the two circuits.

**Revendications**

1. Dispositif hydraulique de commande pour l'hydraulique opérationnelle de tracteurs, notamment pour un système hydraulique constant, avec un tiroir de commande (1, 2), susceptible d'être fixé par l'intermédiaire d'au moins un encliquetage (8, 9) sollicité par un ressort et d'être libéré hydrauliquement, ce tiroir, lorsqu'il est libéré étant ramené automatiquement dans sa position neutre par un effort de rappel, la libération du tiroir de commande (1, 2) s'effectuant chaque fois que la pression de fonctionnement est atteinte sur l'équipement utilisateur (3) mis en circuit, un dispositif (21 ou bien 75), retardant la réaction des encliquetages hydrauliques (8, 9 ou bien 61, 73) étant disposé sur l'alimentation (18, 43 ou bien 68, 91, 94) de ces encliquetages, dispositif hydraulique de commande caractérisé en ce que le dispositif de temporisation (2) comporte une soupape (33) de limitation de la pression avec une soupape de précontrainte (35) branchée à la suite, ainsi qu'un distributeur à tiroir (20) sollicité dans le sens de la fermeture par un ressort, et contrôlant l'alimentation des encliquetages hydrauliques (8, 9) avec du liquide sous pression, le côté frontal (40), côté ressort, de ce distributeur à tiroir étant en communication avec le réservoir (28) du liquide hydraulique par l'intermédiaire d'un étranglement (41) ainsi que d'une soupape de retenue (42) branchée en parallèle sur cet étranglement, tandis que l'autre côté frontal (37) de ce distributeur est relié à la sortie (34) de la soupape (33) de limitation de la pression, et qui est également en communication avec le réservoir (28) par l'intermédiaire d'un étranglement (39).

2. Dispositif de commande selon la revendication 1, dans lequel il est prévu deux circuits hydrauliques de travail indépendants l'un de l'autre, dispositif hydraulique de commande caractérisé en ce que les deux circuits de travail (pompes hydrauliques 45, 46) comportent un dispositif de temporisation commun (75) avec une soupape de précontrainte (18) ainsi qu'un distributeur à tiroir (87), qui est respectivement relié par l'intermédiaire d'une soupape (76, 77) de limitation de la pression à chacun des deux circuits de travail.

Fig. 1

Fig. 2